# EUROPÄISCHE PATENTSCHRIFT

(11) **EP 3 760 683 B1**
(45) Veröffentlichungstag und Bekanntmachung des Hinweises auf die Patenterteilung: **03.04.2024**
(21) Anmeldenummer: 19184400.0
(22) Anmeldetag: 04.07.2019
(51) Int. Cl.: C25B 1/04, C09D 127/18, C09D 135/08, C09D 141/00, H01M 8/1004, H01M 4/88, H01M 8/12, H01M 8/102, C25B 9/23, H01M 8/10

(54) **VERFAHREN ZUR HERSTELLUNG EINER KATALYSATOR-BESCHICHTETEN MEMBRAN**
METHOD FOR PRODUCING A CATALYST-COATED MEMBRANE
PROCÉDÉ DE FABRICATION D'UNE MEMBRANE REVÊTUE DE CATALYSEUR

(43) Veröffentlichungstag der Anmeldung: 06.01.2021
(73) Patentinhaber: Heraeus Precious Metals GmbH & Co. KG, 63450 Hanau (DE)
(72) Erfinder: HASCHÉ, Frédéric, 63450 Hanau (DE); NESSELBERGER, Markus, 63450 Hanau (DE); KUWERTZ, Nadia, 63450 Hanau (DE); EWEINER, Florian, 63450 Hanau (DE); STOICA, Leonard, 63450 Hanau (DE)
(74) Vertreter: Maiwald GmbH

(56) Entgegenhaltungen:
- EP-A1- 2 774 203
- WO-A1-92/15121
- US-A- 5 399 184
- US-A- 5 882 810

## Beschreibung

Die vorliegende Erfindung betrifft ein Verfahren zur Herstellung einer Katalysator-beschichteten Membran für eine Brennstoff- oder Elektrolysezelle.

Die Membran-Elektroden-Einheit einer PEM-Brennstoff- oder - Elektrolysezelle enthält eine Polymerelektrolytmembran ("PEM"), auf deren Vorder- und Rückseite (d.h. ihrer anodischen und kathodischen Seite) jeweils eine Katalysator-haltige Schicht und eine elektrisch leitfähige, poröse Gasdiffusionsschicht (z.B. in Form eines Kohlenstoffpapiers oder Kohlenstofffasergewebes) aufgebracht sind.

Die Katalysator-haltige Schicht kann beispielsweise zunächst auf der Gasdiffusionsschicht aufgebracht werden und diese Katalysator-beschichtete Gasdiffusionsschicht wird anschließend mit der Polymerelektrolytmembran verpresst unter Erhalt einer Membran-Elektroden-Einheit. Alternativ kann die Katalysator-haltige Schicht zunächst auf die Membran aufgebracht werden und anschließend wird die beschichtete Membran mit den Gasdiffusionsschichten verbunden. Siehe beispielsweise B. Bladergroen et al., "Overview of Membrane Electrode Assembly Preparation Methods for Solid Polymer Electrolyte Electrolyzer", 2012, DOI: 10.5772/52947.

Weiterhin ist bekannt, dass die Herstellung einer Katalysator-beschichteten Membran erfolgen kann durch (i) das direkte Aufbringen einer Katalysatorhaltigen Zusammensetzung auf die Membran oder alternativ (ii) das sogenannte Decal-Verfahren, bei dem zunächst eine Katalysator-haltige Schicht auf eine Träger- oder Decalfolie aufgebracht und anschließend durch Druck und ausreichend hohe Temperatur von der Decal-Folie auf die Membran übertragen wird. S.H. Akella et al., Scientific Reports, Vol. 8, Artikel-Nr. 12082, 2018, (DOI:10.1038/s41598-018-30215-0) untersuchen den Einfluss verschiedener Transferfolien im Rahmen des Decal-Verfahrens auf die Eigenschaften der Membran-Elektroden-Einheit.

Beim erstmaligen Betrieb einer Katalysator-beschichteten Membran steht üblicherweise nicht deren volle Leistungsfähigkeit zur Verfügung. Diese entwickelt sich erst im Laufe der Zeit. Hierfür werden sogenannte Aktivierungsprozeduren (engl.: *"break-in"* oder "*conditioning*") genutzt. Diese sind aber zeitintensiv und verlangen den Einsatz von Ressourcen.

US 2017/271693 A1 beschreibt ein Verfahren zur Aktivierung von Brennstoffzellen, wobei wiederholt ein cyclo-voltammetrischer Puls hoher Stromstärke an die Brennstoffzelle angelegt wird.

US 9,735,441 B2 beschreibt ein Verfahren zur Herstellung einer Katalysator-beschichteten Membran, wobei eine Katalysator-haltige Tinte direkt auf die Membran aufgebracht und anschließend durch eine Druck- und Temperaturbehandlung (345-10342 kPa; 130-146°C) eine sehr dünne Katalysatorschicht auf der Membran erhalten wird.

Bei den PEM-Brennstoffzellen wird zwischen Niedertemperatur- und Hochtemperatur-Brennstoffzellen unterschieden. Die NT-PEM-Brennstoffzellen enthalten üblicherweise ein fluoriertes, Sulfonsäuregruppen enthaltendes Polymer als lonomer und können bei Temperaturen von bis etwa 80°C betrieben werden. Fluorierte, Sulfonsäuregruppen enthaltende lonomere für PEM-Brennstoffzellen werden beispielsweise von A. Kusoglu und A.Z. Weber in Chem. Rev., 2017, 117, S. 987-1104, beschrieben. HT-Brennstoffzellen enthalten beispielsweise Phosphorsäure als Elektrolyt und ein basisches Polymer wie z.B. ein Polyimid als Matrix, um die Säure zu binden. HT-PEM-Brennstoffzellen werden beispielsweise bei Temperaturen im Bereich von 130-220°C betrieben. Durch die Anwesenheit der starken anorganischen Säure kann es zu einer Degradierung des Katalysatormaterials (z.B. des Trägermaterials, auf dem das Edelmetall dispergiert ist) kommen.

WO 2007/028626 A1 beschreibt ein Verfahren zur Konditionierung einer Membran-Elektroden-Einheit, wobei die Membran eine anorganische Sauerstoffsäure des Phosphors und/oder Schwefels und ein basisches Polymer (insbesondere ein Polybenzimidazol) enthält. Nach der Laminierung der Polymerelektrolytmatrix und der Elektroden zu einer Membran-Elektroden-Einheit erfolgt eine Konditionierung in einem Temperaturbereich von 60°C bis 300°C.

US 5 399 184 A beschreibt ein Verfahren zur Herstellung einer Elektrodenanordnung einer PEM-Brennstoffzelle, wobei die Membran ein lonomer enthält, dessen Seitenkette perfluoriert ist und folgende Gruppe enthält:

-SOs-X

wobei X H, Na oder K ist,
und die Membran einem Heißpressen bei einer Temperatur, die mindestens 10°C unterhalb der Erweichungstemperatur des lonomers liegt, unterzogen wird.

EP 2 774 203 A1 beschreibt die Herstellung einer mit Katalysator beschichteten Membran, wobei in Schritt a) zunächst eine erste katalysatorhaltige Schicht auf einem Trägermaterial abgeschieden wird, anschließend in Schritt b) auf der ersten katalysatorhaltigen Schicht eine ionomerhaltige Dispersion aufgebracht und die Membran ausgebildet wird und schließlich in Schritt c) eine zweite katalysatorhaltige Schicht auf die Membran aufgebracht wird.

US 5 882 810 A beschreibt eine Membran-Elektroden-Einheit, die eine Ionenaustauschermembran und mindestens zwei auf derselben Seite der Membran positionierte aktive Schichten aufweist. Die aktiven Schichten enthalten jeweils katalytisch aktive Partikel und ein Ionomer, wobei sich die lonomere der beiden aktiven Schichten in ihrem mittleren Molekulargewicht unterscheiden. In Beispiel 1 wird bei der Herstellung der Membran-Elektroden-Einheit eine Tinte, die ein lonomer und katalysatorhaltige Partikel enthält, auf eine Transferfolie aufgebracht und getrocknet, die beschichtete Transferfolie anschließend für 5 Minuten bei 195°C mit der Membran verpresst und nach dem Transfer der aktiven Schicht wieder entfernt.

Eine Aufgabe der vorliegenden Erfindung ist die möglichst effiziente Herstellung einer Katalysator-beschichteten Membran für eine Brennstoff- oder Elektrolysezelle, wobei diese Membran bereits im erstmaligen Betrieb eine hohe Leistungsfähigkeit zeigen sollte, so dass eine aufwändige Aktivierungsbehandlung entfallen oder zumindest in ihrem Umfang reduziert werden kann.

Gelöst wird diese Aufgabe durch ein Verfahren zur Herstellung einer Membran für eine Brennstoff- oder Elektrolysezelle, wobei
(i) eine flüssige Beschichtungszusammensetzung, die einen geträgerten Edelmetall-haltigen Katalysator und ein lonomer enthält, sowohl auf der Vorderseite wie auch auf der Rückseite einer Polymerelektrolytmembran, die ein lonomer enthält, aufgebracht wird,
   oder eine erste flüssige Beschichtungszusammensetzung, die einen geträgerten Edelmetall-haltigen Katalysator und ein lonomer enthält, nur auf der Vorderseite der Polymerelektrolytmembran und eine zweite flüssige Beschichtungszusammensetzung, die einen geträgerten Edelmetall-haltigen Katalysator und ein lonomer enthält, auf der gegenüberliegenden Seite der Polymerelektrolytmembran aufgebracht werden, wobei die erste flüssige Beschichtungszusammensetzung und die zweite flüssige Beschichtungszusammensetzung unterschiedlich sind,
   so dass eine beschichtete Polymerelektrolytmembran, auf deren Vorder- und Rückseite eine Katalysator-haltige Schicht vorliegt, erhalten wird, wobei das lonomer der flüssigen Beschichtungszusammensetzung und das lonomer der Polymerelektrolytmembran jeweils ein Copolymer ist, das als Monomere ein Fluorethylen und einen Sulfonsäuregruppe-haltigen Fluorvinylether enthält, wobei der Sulfonsäuregruppe-haltige Fluorvinylether die Formel (I) aufweist:

   -CF(OR)-CF₂- (I)

   wobei
   R die folgende Formel (II) aufweist:

   -(CF₂-CF(CF₃)-O)ₓ-(CF₂)_{y}-SO₃H (II)

   mit x = 0-3 und y = 1-5;
(ii) die beschichtete Polymerelektrolytmembran thermisch behandelt wird, indem sie auf eine Temperatur im Bereich von 178°C bis 250°C erwärmt wird.

Im Rahmen der vorliegenden Erfindung wird eine flüssige Katalysator-haltige Beschichtungszusammensetzung direkt auf die Polymerelektrolytmembran ("PEM") appliziert. Ein Transferschritt unter Verwendung einer Decal-Folie bei erhöhter Temperatur und erhöhtem Druck ist also nicht erforderlich. Die im Direktdruckverfahren beschichtete Membran kann außerdem einen niedrigeren elektrischen Widerstand aufweisen, so dass sich ein höherer Wirkungsgrad realisieren lässt. Das lonomer ist ein fluoriertes, Sulfonsäuregruppen-haltiges Polymer, wie es üblicherweise in Niedertemperatur-PEM-Brennstoffzellen Anwendung findet. Obwohl die thermische Behandlung der Katalysator-beschichteten Membran bei 178°C bis 250°C und somit signifikant oberhalb der üblichen Betriebstemperatur stattfindet, wurde in der vorliegenden Erfindung überraschend festgestellt, dass mit dieser thermischen Behandlung eine Membran erhalten wird, die bereits im erstmaligen Betrieb eine hohe Leistungsfähigkeit aufweist. Eine aufwändige Aktivierungsbehandlung in der Brennstoff- oder Elektrolysezelle kann somit entfallen oder zumindest in ihrem Umfang deutlich reduziert werden. Außerdem zeigt eine durch das erfindungsgemäße Verfahren hergestellte Membran in einer PEM-Brennstoffzelle eine verbesserte Performance im Hoch-Strombereich (Massentransportbereich).

Copolymere, die als Monomere ein Fluorethylen und einen Sulfonsäuregruppe-haltigen Fluorvinylether enthalten und als lonomere in PEM-Brennstoffzellen fungieren können, sind dem Fachmann allgemein bekannt und lassen sich durch bekannte Verfahren herstellen oder sind kommerziell erhältlich. Eine Übersicht zu diesen lonomeren findet sich z.B. in folgender Publikation: A. Kusoglu und A.Z. Weber in Chem. Rev., 2017, 117, S. 987-1104.

In dem lonomer der flüssigen Beschichtungszusammensetzung und/oder dem lonomer der Polymerelektrolytmembran ist das Fluorethylen beispielsweise ein Tetrafluorethylen, d.h. -CF₂-CF₂-.

In dem lonomer der flüssigen Beschichtungszusammensetzung und dem lonomer der Polymerelektrolytmembran weist der Sulfonsäuregruppe-haltige Fluorvinylether folgende Formel (I) auf:

-CF(OR)-CF₂- (I)

wobei
R die folgende Formel (II) aufweist:

-(CF₂-CF(CF₃)-O)ₓ-(CF₂)_{y}-SO₃H (II)

mit x = 0-3 und y = 1-5.

Gemäß einer beispielhaften Ausführungsform sind x = 0-3 und y = 2-5.

Gemäß einer weiteren beispielhaften Ausführungsform sind x = 0 oder 1 und y = 1-5.

Beispielsweise sind x = 1 und y = 2; oder x = 0 und y = 2, 3 oder 4.

Neben dem Fluorethylen und dem Sulfonsäuregruppe-haltigen Fluorvinylether kann das Copolymer optional noch mindestens ein weiteres Monomer enthalten. Alternativ ist es aber auch möglich, dass das Copolymer kein weiteres Monomer enthält.

Das lonomer der flüssigen Zusammensetzung und das lonomer der Polymerelektrolytmembran können identisch sein. Alternativ können sich die beiden lonomere in mindestens einer ihrer Eigenschaften unterscheiden, beispielsweise in ihrem Molekulargewicht. Beispielsweise kann das in der Polymerelektrolytmembran vorliegende lonomer ein höheres mittleres Molekulargewicht aufweisen als das in der flüssigen Beschichtungszusammensetzung vorliegende Ionomer. In der Polymerelektrolytmembran kann optional noch ein weiteres lonomer vorliegen. Alternativ kann es im Rahmen der vorliegenden Erfindung bevorzugt sein, dass die PEM kein weiteres lonomer enthält.

Bevorzugt enthält die PEM kein Polymer, das ein basisches Monomer (beispielsweise ein Stickstoff-haltiges Monomer wie z.B. ein Stickstoff-haltiges heterocyclisches Monomer) enthält.

In einer bevorzugten Ausführungsform enthält die Polymerelektrolytmembran keine anorganische Sauerstoffsäure des Phosphors (wie z.B. Phosphorsäure) und/oder des Schwefels (wie z.B. Schwefelsäure).

Zur Verbesserung der mechanischen Festigkeit und Formstabilität kann die Polymerelektrolytmembran optional noch weitere Komponenten enthalten, beispielsweise ein Polytetrafluorethylen in Form eines Netzes.

Geträgerte Edelmetall-haltige Katalysatoren für Brennstoff- oder Elektrolysezellen sind dem Fachmann bekannt. Das Edelmetall ist bevorzugt ein Platinmetall (Pt, Pd, Ir, Rh, Ru oder Os). Das Edelmetall kann in elementarer Form oder als Legierung vorliegen. Als Trägermaterial fungiert beispielsweise ein Kohlenstoffmaterial oder ein Oxid (z.B. ein Übergangsmetalloxid wie Titandioxid). Ein Kohlenstoffmaterial ist dabei bevorzugt. Ein beispielhafter geträgerter Katalysator für eine Brennstoff- oder Elektrolysezelle wird in EP 2954951 A1 beschrieben.

Die flüssige Beschichtungszusammensetzung ist bevorzugt eine wässrige Beschichtungszusammensetzung. Neben Wasser kann die Beschichtungszusammensetzung noch ein oder mehrere organische Lösungsmittel, beispielsweise einen C₁₋₄-Alkohol wie Methanol, Ethanol oder n-Propanol enthalten.

Beispielsweise enthält die flüssige Beschichtungszusammensetzung den geträgerten Edelmetall-haltigen Katalysator in einer Menge von 5-20 Gew%, das lonomer in einer Menge von 2-8 Gew% und Wasser in einer Menge von mindestens 60 Gew% sowie einen C₁₋₄-Alkohol (insbesondere Methanol, Ethanol oder n-Propanol oder ein Gemisch aus mindestens zwei dieser Alkohole) in einer Menge von 10-20 Gew%.

Das Aufbringen der flüssigen Beschichtungszusammensetzung auf die Polymerelektrolytmembran kann über herkömmliche, dem Fachmann bekannte Verfahren erfolgen. Beispielsweise wird die flüssige Beschichtungszusammensetzung durch eine Düse (z.B. eine Schlitzdüse), ein Rakel, eine Walze, einen Stab (z.B. einen Meyer-Stab), eine Sprühvorrichtung, Siebdruck, Offset-Druck, Schablonendruck, Rasterdruck oder eine Kombination von mindestens zwei dieser Beschichtungsmethoden aufgebracht.

Die flüssige Beschichtungszusammensetzung kann beispielsweise sowohl auf der Vorderseite wie auch auf der Rückseite der Polymerelektrolytmembran aufgebracht werden. Dieses Aufbringen kann gleichzeitig oder auch nacheinander erfolgen.

Alternativ ist es im Rahmen der vorliegenden Erfindung auch möglich, die flüssige Beschichtungszusammensetzung als eine erste Beschichtungszusammensetzung nur auf der Vorderseite der Polymerelektrolytmembran aufzubringen und auf der gegenüberliegenden Seite eine zweite flüssige Beschichtungszusammensetzung aufzubringen, wobei die erste Beschichtungszusammensetzung und die zweite Beschichtungszusammensetzung unterschiedlich sind. Die erste Beschichtungszusammensetzung und die zweite Beschichtungszusammensetzung können gleichzeitig oder zu unterschiedlichen Zeiten aufgebracht werden. Wie die erste Beschichtungszusammensetzung kann auch die zweite Beschichtungszusammensetzung einen geträgerten Edelmetall-haltigen Katalysator und ein lonomer enthalten. Hinsichtlich der bevorzugten Eigenschaften dieser beiden Komponenten kann auf die obigen Ausführungen verwiesen werden. Beispielsweise unterscheiden sich die beiden Beschichtungszusammensetzungen in dem Gehalt an geträgertem Edelmetall-haltigen Katalysator.

Beim Aufbringen der flüssigen Beschichtungszusammensetzung weist die Polymerelektrolytmembran beispielsweise eine Temperatur im Bereich von 20-120°C, bevorzugter 20-70°C auf.

Nach dem Aufbringen der flüssigen Beschichtungszusammensetzung und vor der thermischen Behandlung bei 178°C-250°C in Schritt (ii) kann die beschichtete PEM optional noch einem Trocknungsschritt unterzogen werden. Für die Trocknung beträgt die Temperatur der Polymerelektrolytmembran beispielsweise 20°C bis 120°C. Die Dauer der Trocknung beträgt beispielsweise 1-10 Minuten.

Die auf der beschichteten Polymerelektrolytmembran vorliegende Katalysator-haltige Schicht weist vor dem Trocknen beispielsweise eine Dicke im Bereich von 40-300 µm auf. Auf der anodischen Seite der PEM beträgt die Dicke vor dem Trocknen beispielsweise 40-100 µm, während die Dicke auf kathodischer Seite vor dem Trocknen beispielsweise 200-300 µm beträgt. Nach dem Trocknen weist die auf der beschichteten Polymerelektrolytmembran vorliegende Katalysator-haltige Schicht beispielsweise eine Dicke im Bereich von 1-30 µm auf (auf anodischer Seite der PEM z.B. 1-10 µm und auf kathodischer Seite z.B. 5-30 µm).

Während des Trocknens ist die beschichtete Polymerelektrolytmembran bevorzugt keinem externen Druck ausgesetzt.

In Schritt (ii) des erfindungsgemäßen Verfahrens wird die beschichtete Polymerelektrolytmembran auf eine Temperatur im Bereich von 178°C bis 250°C erwärmt.

Wie nachfolgend noch eingehender beschrieben, wird durch die thermische Behandlung in Schritt (ii) eine Membran erhalten, die
- bereits im erstmaligen Betrieb in der Zelle eine hohe Leistungsfähigkeit aufweist, wodurch eine aufwändige Aktivierungsbehandlung in der Brennstoff- oder Elektrolysezelle entfallen oder zumindest in ihrem Umfang deutlich reduziert werden kann, und
- eine deutlich verbesserte Performance im Hoch-Strombereich (Massentransportbereich) zeigt.

Hinsichtlich einer energieeffizienten Verfahrensführung kann es beispielsweise vorteilhaft sein, die thermische Behandlung bei 178-210°C durchzuführen. Das erfindungsgemäße Verfahren kann aber auch durchgeführt werden, indem die Polymerelektrolytmembran für die thermische Behandlung auf eine Temperatur von 200-250°C oder 220-250°C oder 230-250°C erwärmt wird.

Die auf 178°C bis 250°C erwärmte beschichtete Polymerelektrolytmembran wird beispielsweise für eine Zeitdauer von 1 Sekunde bis 5 Minuten in diesem Temperaturbereich gehalten. Während der thermischen Behandlung in Schritt (ii) wird die beschichtete Polymerelektrolytmembran bevorzugt keinem externen Druck ausgesetzt.

Das Erwärmen der beschichteten Polymerelektrolytmembran auf die erforderliche Temperatur kann durch herkömmliche, dem Fachmann allgemein bekannte Vorrichtungen erfolgen. Beispielsweise erfolgt die thermische Behandlung in einem Ofen und/oder durch einen Strahler (z.B. einen IR-Strahler).

Bevorzugt erfolgt die thermische Behandlung bei 178-250°C strom- und spannungsfrei, d.h. die beschichtete Polymerelektrolytmembran ist während der thermischen Behandlung nicht mit einer Strom- oder Spannungsquelle verbunden. Bevorzugt erfolgt die thermische Behandlung der beschichteten Polymerelektrolytmembran außerhalb einer Brennstoff- oder Elektrolysezelle.

Die mit dem erfindungsgemäßen Verfahren hergestellte Membran kann beispielsweise in einer Wasserstoff- oder Methanol-Brennstoffzelle oder einer Wasserelektrolysezelle verwendet werden.

Ein Verfahren zur Herstellung einer Brennstoff- oder Elektrolysezelle umfasst beispielsweise folgende Schritte:
- die Herstellung der Membran gemäß dem oben beschriebenen erfindungsgemäßen Verfahren,
- Einbau der Membran in eine Brennstoff- oder Elektrolysezelle.

Anhand der folgenden Beispiele wird die Erfindung eingehender erläutert.

### Beispiele

In allen Beispielen wurde ein geträgerter Platinkatalysator (Kohlenstoff als Trägermaterial) verwendet.

### Beispiel 1

Es wurde eine Polymerelektrolytmembran verwendet, deren lonomer ein Copolymer aus Tetrafluorethylen und einem perfluorierten Sulfonsäuregruppe-haltigen Vinylether ist. Die Membran ist kommerziell erhältlich unter der Bezeichnung MX820.15 von der Firma Gore.

Es wurde eine wässrige Beschichtungszusammensetzung hergestellt. Diese enthielt den geträgerten Platinkatalysator in einer Menge von 7,19 Gew% und ein lonomer in einer Menge von 4,05 Gew%. Das lonomer war ein Copolymer aus Tetrafluorethylen und einem perfluorierten Sulfonsäuregruppe-haltigen Vinylether, der sich durch folgende Formel wiedergeben lässt:

-CF(OR)-CF₂-

wobei
R folgende Formel aufweist: -(CF₂)₄-SO₃H

Die wässrige Beschichtungszusammensetzung wurde durch ein Spaltrakel mit einer Spalthöhe von 175 µm nacheinander auf der Vorder- und Rückseite der Membran bei 40°C aufgebracht und getrocknet.

Auf diese Weise wurden mehrere beschichtete Membrane hergestellt. Anschließend wurde jede dieser Katalysator-beschichteten Membrane einer thermischen Behandlung unterzogen, wobei aber die Membrane auf unterschiedliche Temperaturen erwärmt wurden.

| | |
|---|---|
| Membran 1.1: | Erwärmung auf 150°C |
| Membran 1.2: | Erwärmung auf 160°C |
| Membran 1.3: | Erwärmung auf 170°C |
| Membran 1.4: | Erwärmung auf 180°C |

Alle Membrane wurden über eine Zeitdauer von 4 Minuten in einem Trockenschrank erwärmt.

Für jede dieser 4 Membrane wurde anschließend die Stromdichte als Funktion der Zeit bestimmt, um das "Break-In"-Verhalten zu beobachten. Dazu wurde auf jede Seite der beschichteten Membran je eine handelsübliche Gasdiffusionsschicht (28BC von SGL Carbon) gelegt und diese Anordnung in einer Testzelle mit 20% Kompression verbaut. Die Testzelle umfasst beheizbare Endplatten sowie goldbeschichtete Stromabnehmer und Gasverteilungplatten aus Graphit. Nach dem Einbau in eine Testanlage (G40 von Greenlight Innovation) wurden folgende Bedingungen eingestellt: Zelltemperatur 60°C; relative Eingangsfeuchte der Gase auf Anode und Kathode 100%; Eingangsdruck auf Anode und Kathode 150 kPa (abs.); Gasfluss an der Anode 1394 Normkubikzentimeter Wasserstoff; Gasfluss an der Kathode 3323 Normkubikzentimeter Luft.

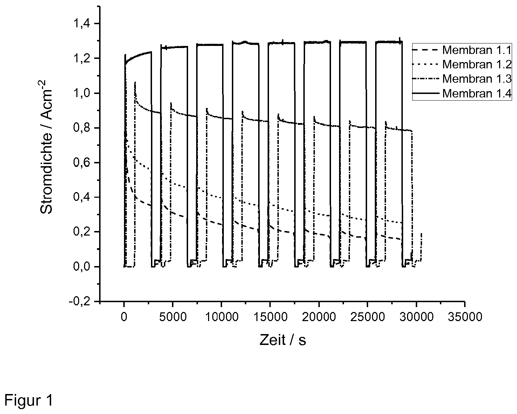

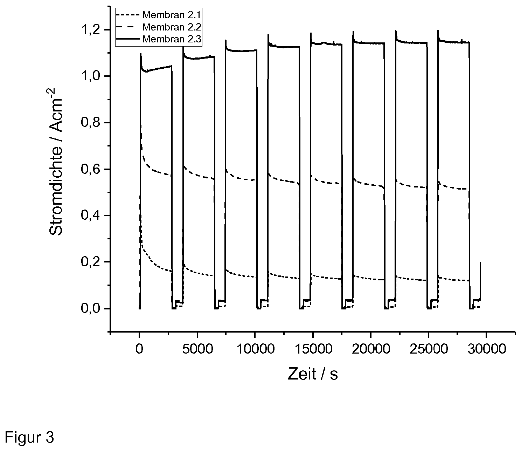

Der Break-In, wie in den Figuren 1 und 3 zu sehen, besteht aus 8 identischen spannungsgeführten Lastzyklen mit folgendem Profil: 45min bei 0,6V, 5min bei 0,95V und 10min bei 0,85V.

Figur 1 zeigt die Ergebnisse dieser Messungen.

Die thermische Behandlung bei 180°C führt zu einer deutlichen Leistungssteigerung in feuchten Betriebsbedingungen und zu einer Performancestabilisierung, die nicht erst nach mehreren Zyklen, sondern sehr frühzeitig einsetzt. Ein sog. "Pre-Conditioning"- oder ein "Break-In"-Schritt zur Aktivierung der Membran kann daher entfallen.

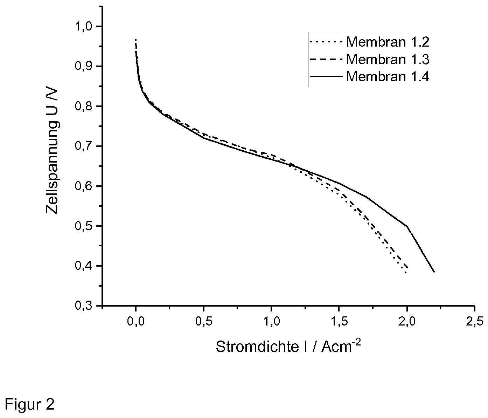

Für jede der Membrane 1.1 bis 1.4 wurde außerdem die Polarisationskurve (Zellenspannung als Funktion der Stromdichte) unter SAE-Bedingungen (Zelltemperatur 80°C; relative Eingangsfeuchte der Gase auf Anode und Kathode 66%; Eingangsdruck auf Anode und Kathode 170 kPa (abs.); Gasfluss an der Anode 1000 Normkubikzentimeter Wasserstoff; Gasfluss an der Kathode 5000 Normkubikzentimeter Luft) bestimmt. Die Ergebnisse werden in Figur 2 gezeigt. Es zeigt sich für die Membran, die auf 180°C erwärmt wurde, gegenüber den bei niedrigerer Temperatur behandelten Membranen eine deutliche Steigerung im hohen Strombereich (>0,6 A/cm²).

### Beispiel 2

Die Polymerelektrolytmembran in Beispiel 2 entsprach der in Beispiel 1 verwendeten Polymerelektrolytmembran.

Es wurde eine wässrige Beschichtungszusammensetzung hergestellt. Diese enthielt den geträgerten Platinkatalysator in einer Menge von 5 Gew% und ein lonomer in einer Menge von 2,24 Gew%. Das lonomer war ein Copolymer aus Tetrafluorethylen und einem perfluorierten Sulfonsäuregruppe-haltigen Vinylether, der sich durch folgende Formel wiedergeben lässt:

-CF(OR)-CF₂-

wobei
R folgende Formel aufweist: -(CF₂)₂-SO₃H

Die wässrige Beschichtungszusammensetzung wurde durch ein Spaltrakel mit einer Spalthöhe von 100 µm auf der Vorder- und 300 µm auf der Rückseite der Membran bei 40°C aufgebracht und getrocknet.

Auf diese Weise wurden mehrere beschichtete Membrane hergestellt. Anschließend wurde jede dieser Katalysator-beschichteten Membrane einer thermischen Behandlung unterzogen, wobei aber die Membrane auf unterschiedliche Temperaturen erwärmt wurden.

| | |
|---|---|
| Membran 2.1: | Erwärmung auf 155°C |
| Membran 2.2: | Erwärmung auf 175°C |
| Membran 2.3: | Erwärmung auf 205°C |

Alle Membrane wurden über eine Zeitdauer von 4 Minuten in einem Trockenschrank erwärmt.

Für jede dieser 4 Membrane wurde anschließend die Stromdichte als Funktion der Zeit bestimmt.

Figur 3 zeigt die Ergebnisse dieser Messungen.

Die thermische Behandlung bei 205°C führt zu einer deutlichen Leistungssteigerung in feuchten Betriebsbedingungen und zu einer Performancestabilisierung, die nicht erst nach mehreren Zyklen, sondern sehr frühzeitig einsetzt. Ein sog. "Pre-Conditioning"- oder ein "Break-In"-Schritt zur Aktivierung der Membran kann daher entfallen.

## Patentansprüche

1. Ein Verfahren zur Herstellung einer Membran für eine Brennstoff- oder Elektrolysezelle, wobei
(i) eine flüssige Beschichtungszusammensetzung, die einen geträgerten Edelmetall-haltigen Katalysator und ein lonomer enthält, sowohl auf der Vorderseite wie auch auf der Rückseite einer Polymerelektrolytmembran, die ein lonomer enthält, aufgebracht wird,
oder eine erste flüssige Beschichtungszusammensetzung, die einen geträgerten Edelmetall-haltigen Katalysator und ein lonomer enthält, nur auf der Vorderseite der Polymerelektrolytmembran und eine zweite flüssige Beschichtungszusammensetzung, die einen geträgerten Edelmetall-haltigen Katalysator und ein lonomer enthält, auf der gegenüberliegenden Seite der Polymerelektrolytmembran aufgebracht werden, wobei die erste flüssige Beschichtungszusammensetzung und die zweite flüssige Beschichtungszusammensetzung unterschiedlich sind, so dass eine beschichtete Polymerelektrolytmembran, auf deren Vorder- und Rückseite eine Katalysator-haltige Schicht vorliegt, erhalten wird, wobei das lonomer der flüssigen Beschichtungszusammensetzung und das lonomer der Polymerelektrolytmembran jeweils ein Copolymer ist, das als Monomere ein Fluorethylen und einen Sulfonsäuregruppe-haltigen Fluorvinylether enthält, wobei der Sulfonsäuregruppe-haltige Fluorvinylether die Formel (I) aufweist:
-CF(OR)-CF₂- (I)
wobei
R die folgende Formel (II) aufweist:
-(CF₂-CF(CF₃)-O)ₓ-(CF₂)_{y}-SO₃H (II)
mit x = 0-3 und y = 1-5;
(ii) die beschichtete Polymerelektrolytmembran thermisch behandelt wird, indem sie auf eine Temperatur im Bereich von 178°C bis 250°C erwärmt wird.

2. Das Verfahren nach Anspruch 1, wobei das Fluorethylen ein Tetrafluorethylen ist.

3. Das Verfahren nach Anspruch 1 oder 2, wobei die
Polymerelektrolytmembran kein weiteres lonomer enthält; und/oder die Polymerelektrolytmembran keine anorganische Sauerstoffsäure des Phosphors und/oder des Schwefels enthält.

4. Das Verfahren nach einem der vorstehenden Ansprüche, wobei in dem Polymerelektrolytmembran kein Polymer vorliegt, das ein basisches Monomer enthält.

5. Das Verfahren nach einem der vorstehenden Ansprüche, wobei das Edelmetall ein Platinmetall ist und der geträgerte Katalysator als Trägermaterial ein Kohlenstoffmaterial oder ein Oxid enthält.

6. Das Verfahren nach einem der vorstehenden Ansprüche, wobei die flüssige Beschichtungszusammensetzung eine wässrige Beschichtungszusammensetzung ist.

7. Das Verfahren nach Anspruch 6, wobei die wässrige Beschichtungszusammensetzung den geträgerten Edelmetall-haltigen Katalysator in einer Menge von 5-20 Gew%, das lonomer in einer Menge von 2-8 Gew% und Wasser in einer Menge von mindestens 60 Gew% sowie einen C₁₋₄-Alkohol in einer Menge von 10-20 Gew% enthält.

8. Das Verfahren nach einem der vorstehenden Ansprüche, wobei die flüssige Beschichtungszusammensetzung auf die Polymerelektrolytmembran durch eine Düse, ein Rakel, eine Walze, einen Stab, eine Sprühvorrichtung, einen Siebdruck, einen Offset-Druck, einen Schablonendruck oder einen Rasterdruck oder eine Kombination von mindestens zwei dieser Beschichtungsmethoden aufgebracht wird.

9. Das Verfahren nach einem der vorstehenden Ansprüche, wobei die beschichtete Polymerelektrolytmembran vor der thermischen Behandlung in Schritt (ii) einem Trocknungsschritt unterzogen wird.

10. Verfahren nach einem der vorstehenden Ansprüche, wobei die in Schritt (ii) auf 178°C bis 250°C erwärmte beschichtete Polymerelektrolytmembran für eine Zeitdauer von 1 Sekunde bis 5 Minuten in diesem Temperaturbereich gehalten wird.

11. Verfahren nach einem der vorstehenden Ansprüche, wobei die Brennstoffzelle eine Wasserstoff-Brennstoffzelle oder eine Methanol-Brennstoffzelle ist; oder wobei die Elektrolysezelle eine Wasserelektrolysezelle ist.

## Claims

1. A method for producing a membrane for a fuel cell or electrolytic cell, wherein
(i) a liquid coating composition containing a supported, noble-metal-containing catalyst and an ionomer is applied to both the front side and the rear side of a polymer electrolyte membrane containing an ionomer,
or a first liquid coating composition containing a supported, noble-metal-containing catalyst and an ionomer is only applied to the front side of the polymer electrolyte membrane and a second liquid coating composition containing a supported, noble-metal-containing catalyst and an ionomer is applied to the opposite side of the polymer electrolyte membrane, wherein the first liquid coating composition and the second liquid coating composition are different so that a coated polymer electrolyte membrane, on the front and rear side of which a catalyst-containing layer is present, is obtained, wherein the ionomer of the liquid coating composition and the ionomer of the polymer electrolyte membrane is in each case a copolymer containing a fluoroethylene and a sulfonic acid group-containing fluorovinyl ether as monomers, wherein the sulfonic acid group-containing fluorovinyl ether comprises formula (I):
-CF(OR)-CF₂- (I)
wherein
R comprises the following formula (II):
-(CF₂-CF(CF₃)-O)ₓ-(CF_{z})_{y}-SO₃H (II)
where x = 0-3 and y = 1-5;
(ii) the coated polymer electrolyte membrane is thermally treated by being heated to a temperature in the range from 178 °C to 250 °C.

2. The method according to claim 1, wherein the fluoroethylene is a tetrafluoroethylene.

3. The method according to either claim 1 or claim 2, wherein the polymer electrolyte membrane does not contain any further ionomer, and/or the polymer electrolyte membrane does not contain any inorganic oxygen acid of phosphorus and/or sulfur.

4. The method according to any of the preceding claims, wherein a polymer containing a base monomer is not present in the polymer electrolyte membrane.

5. The method according to any of the preceding claims, wherein the noble metal is a platinum metal and the supported catalyst contains a carbon material or an oxide as a support material.

6. The method according to any of the preceding claims, wherein the liquid coating composition is an aqueous coating composition.

7. The method according to claim 6, wherein the aqueous coating composition comprises the supported, noble-metal-containing catalyst in an amount from 5-20 wt.%, the ionomer in an amount from 2-8 wt.%, water in an amount of at least 60 wt.%, and a C₁₋₄ alcohol in an amount from 10-20 wt.%.

8. The method according to any of the preceding claims, wherein the liquid coating composition is applied to the polymer electrolyte membrane by a nozzle, a doctor blade, a roller, a rod, a spray device, a screen printing process, an offset printing process, a stencil printing process or a halftone printing process, or a combination of at least two of these coating methods.

9. The method according to any of the preceding claims, wherein the coated polymer electrolyte membrane is subjected to a drying step before the thermal treatment in step (ii).

10. The method according to any of the preceding claims, wherein the coated polymer electrolyte membrane which is heated in step (ii) to 178 °C to 250 °C is kept in this temperature range for a period of from 1 second to 5 minutes.

11. The method according to any of the preceding claims, wherein the fuel cell is a hydrogen fuel cell or a methanol fuel cell, or wherein the electrolytic cell is a water electrolytic cell.

## Revendications

1. Procédé de fabrication d'une membrane pour une pile à combustible ou cellule d'électrolyse, dans lequel
(i) une composition de revêtement liquide qui contient un catalyseur sur support contenant un métal précieux et un ionomère est appliquée aussi bien sur le côté avant que sur le côté arrière d'une membrane à électrolyte polymère qui contient un Ionomère,
ou une première composition de revêtement liquide qui contient un catalyseur sur support contenant un métal précieux et un ionomère n'est appliquée que sur le côté avant de la membrane à électrolyte polymère, et une seconde composition de revêtement liquide qui contient un catalyseur sur support contenant un métal précieux et un ionomère est appliquée sur le côté opposé de la membrane à électrolyte polymère, dans lequel la première composition de revêtement liquide et la seconde composition de revêtement liquide sont différentes, de sorte que l'on obtient une membrane à électrolyte polymère revêtue sur le côté avant et le côté arrière de laquelle une couche contenant un catalyseur est présente, dans lequel l'ionomère de la composition de revêtement liquide et l'ionomère de la membrane à électrolyte polymère sont respectivement un copolymère qui contient, comme monomères, un fluoroéthylène et un éther fluorovinylique contenant un groupe acide sulfonique, dans lequel l'éther fluorovinylique contenant un groupe acide sulfonique présente la formule (I) :
-CF(OR)-CF₂- (I)
dans lequel
R présente la formule (II) suivante :
-(CF₂-CF(CF₃)-O)ₓ-(CF₂)_{y}-SO₃H (II)
avec x = 0 à3 ety= 1 à 5 ;
(ii) la membrane à électrolyte polymère revêtue est traitée thermiquement en étant chauffée à une température dans la plage allant de 178 °C à 250 °C.

2. Procédé selon la revendication 1, dans lequel le fluoroéthylène est un tétrafluoroéthylène.

3. Procédé selon la revendication 1 ou 2, dans lequel la membrane à électrolyte polymère ne contient aucun ionomère supplémentaire ; et/ou la membrane à électrolyte polymère ne contient aucun oxyacide inorganique du phosphore et/ou du soufre.

4. Procédé selon l'une des revendications précédentes, dans lequel, dans la membrane à électrolyte polymère, il n'existe aucun polymère qui contient un monomère basique.

5. Procédé selon l'une des revendications précédentes, dans lequel le métal précieux est un métal du groupe du platine et le catalyseur sur support contient un matériau carboné ou un oxyde comme matériau de support.

6. Procédé selon l'une des revendications précédentes, dans lequel la composition de revêtement liquide est une composition de revêtement aqueuse.

7. Procédé selon la revendication 6, dans lequel la composition de revêtement aqueuse contient le catalyseur sur support contenant un métal précieux en une quantité allant de 5 à 20 % en poids, l'ionomère en une quantité allant de 2 à 8 % en poids et de l'eau en une quantité d'au moins 60 % en poids, ainsi qu'un alcool en C₁₋₄ en une quantité allant de 10 à 20 % en poids.

8. Procédé selon l'une des revendications précédentes, dans lequel la composition de revêtement liquide est appliquée sur la membrane à électrolyte polymère grâce à une buse, une raclette, un rouleau, une barre, un pulvérisateur, une impression par sérigraphie, une impression offset, une impression au pochoir ou une impression tramée ou une combinaison d'au moins deux de ces méthodes de revêtement.

9. Procédé selon l'une des revendications précédentes, dans lequel la membrane à électrolyte polymère revêtue est soumise à une étape de séchage avant le traitement thermique à l'étape (ii).

10. Procédé selon l'une des revendications précédentes, dans lequel la membrane à électrolyte polymère revêtue chauffée à 178 °C à 250 °C à l'étape (ii) est maintenue dans cette plage de température pendant une durée allant d'une seconde à cinq minutes.

11. Procédé selon l'une des revendications précédentes, dans lequel la pile à combustible est une pile à combustible à hydrogène ou une pile à combustible au méthanol ; ou dans lequel la cellule d'électrolyse est une cellule d'électrolyse à l'eau.
